# EUROPEAN PATENT APPLICATION

(11) **EP 3 640 301 A1**
(43) Date of publication of application: **22.04.2020**
(21) Application number: 18200517.3
(22) Date of filing: 15.10.2018
(51) Int. Cl.: C08L 69/00

(54) **LOW DENSITY DUCTILE COMPOSITIONS AND USES THEREOF**

(71) Applicant: SABIC Global Technologies B.V., 4612 PX Bergen op Zoom (NL)
(72) Inventor: GUO, Mingcheng, Shanghai, 201319 (CN); NA, Ying, Shanghai, 201319 (CN); YANG, Jian, Shanghai, 201319 (CN); NIU, Yaming, Shanghai (CN)
(74) Representative: Elzaburu S.L.P.

(57) **Abstract**

Disclosed is a composition comprising from about 20 wt. % to about 80 wt. % of a polycarbonate, from about 10 wt. % to about 50 wt. % % of a polypropylene, from about 1 wt. % to about 30 wt. % of a compatibilizer; and from about 0.01 wt. % to about 0.5 wt. % of a salt of a long chain aliphatic carboxylic acid. The composition exhibits a density of less 1.5 g/cm³ when tested in accordance with ASTM D792, and exhibits a notched Izod impact strength of greater than 30 J/m when tested in accordance with ASTM D256.

## Description

### FIELD OF THE DISCLOSURE

The disclosure relates to polycarbonate compositions, more specifically, low density, ductile polycarbonate compositions.

### BACKGROUND OF THE DISCLOSURE

Lightweight or low density materials continue to gain more and more attention in many different industry areas including automotive, aerospace, shipping, rail, and consumer electronics, among others. Lighter materials may also provide the benefit of requiring less fuel for transport, thus having lower environmental costs. Low weight and size are also particularly desirable features of modern consumer electronics devices. Polycarbonate (PC) is a widely used thermoplastic engineering resin having many industry applications, especially electronics, because of the material's good impact performance and good ductility. However, compared to other plastic materials, polycarbonate has a higher density. It would be desirable to develop a polycarbonate based material that maintains certain performance properties while having a reduced density. These and other shortcomings are addressed by aspects of the present disclosure.

### SUMMARY

Aspects of the disclosure relate to a composition comprising: from about 20 wt. % to about 80 wt. % of a polycarbonate; from about 10 wt. % to about 50 wt. % % of a polypropylene; from about 1 wt. % to about 30 wt. % of a compatibilizer; and from about 0.01 wt. % to about 0.5 wt. % of a salt of an aliphatic carboxylic acid. The composition exhibits a density of less 1.5 g/cm³ when tested in accordance with ASTM D792, and exhibits a notched Izod impact strength of greater than 30 J/m when tested in accordance with ASTM D256.

Further aspects of the disclosure relate to methods of forming the composition.

### DETAILED DESCRIPTION

The present disclosure can be understood more readily by reference to the following detailed description of the disclosure and the Examples included therein. Aspects of the present disclosure relate to relatively low density compositions exhibiting good ductility. Low weight and size are also particularly desirable features of modern consumer electronics devices. Polycarbonate (PC), while widely used in a number of industries because of its good impact performance and good ductility, has a relatively high density when compared to other industrial plastics.

Reinforcing fillers, such as high strength hollow glass beads, may be useful in achieving lower density in conventional polycarbonate materials. However, during compounding using a twin-screw extruder, for example, the beads may be broken or damaged, thereby diminishing the effect of the beads on density of a given resin.

The present disclosure combines low density polymers, such as a polypropylene, and compatibilizers with polycarbonate and a salt of an aliphatic carboxylic acid to provide lightweight/low density and ductile, especially low temperature ductile, compositions. Particularly, these compositions may exhibit both low temperature ductility and impact strength.

### COMPOSITIONS

In various aspects, the present disclosure pertains to a composition including a polycarbonate, a polypropylene, a compatibilizer, and a salt of an aliphatic carboxylic acid. In some aspects the composition may have a relatively low density when tested in accordance with ASTM D792. For example, in certain aspects the composition, has a density of less than 1.5 grams per cubic centimeter (g/cm³) or less than 1.3 g/cm³, or less than 1.2 g/cm³. In further aspects the composition has a density of about 1.05 g/cm³.

### POLYCARBONATE

In one aspect, the disclosed compositions include a polymeric base resin. In some aspects, the polymeric base resin includes polycarbonate (PC).

A polycarbonate may include any polycarbonate material or mixture of materials, for example, as recited in U.S. Patent No. 7,786,246, which is hereby incorporated in its entirety for the specific purpose of disclosing various polycarbonate compositions and methods. The term polycarbonate may be further defined as compositions having repeating structural units of the formula (1): 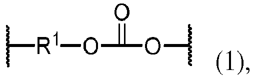 in which at least 60 percent of the total number of R¹ groups are aromatic organic radicals and the balance thereof are aliphatic, alicyclic, or aromatic radicals. In a further aspect, each R¹ is an aromatic organic radical and, more preferably, a radical of the formula (2):

-A¹-Y¹-A²- (2),

wherein each of A¹ and A² is a monocyclic divalent aryl radical and Y¹ is a bridging radical having one or two atoms that separate A¹ from A². In various aspects, one atom separates A¹ from A². For example, radicals of this type include, but are not limited to, radicals such as -O-, -S-, -S(O)-, -S(O₂)-, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical Y¹ is preferably a hydrocarbon group or a saturated hydrocarbon group such as methylene, cyclohexylidene, or isopropylidene.

In various further aspects, "polycarbonates" and "polycarbonate resins" as used herein further include homopolycarbonates, copolymers including different R¹ moieties in the carbonate (referred to herein as "copolycarbonates"), copolymers including carbonate units and other types of polymer units, such as ester units, polysiloxane units, and combinations including at least one of homopolycarbonates and copolycarbonates. As used herein, "combination" is inclusive of blends, mixtures, alloys, reaction products, and the like.

In some aspects, the polycarbonate polymer is a homopolymer. For example, the polycarbonate homopolymer may comprise repeating units derived from bisphenol A.

In a still further aspect, the polycarbonate component is a copolymer. In a still further aspect, the copolymer includes repeating units derived from BPA. In yet a further aspect, the copolymer includes repeating units derived from sebacic acid. In an even further aspect, the copolymer includes repeating units derived from sebacic acid and BPA. Useful polycarbonate copolymers are commercially available and include, but are not limited to, those marketed under the trade names LEXAN™ EXL and LEXAN™ HFD polymers, and are available from SABIC, as well as LEXAN™ SLX resin, an isophthalic acid/terephthalic acid/resorcinol (ITR)-polycarbonate copolymer with molecular weight 20,000-30,000..

For example, the composition may comprise a polyester-polycarbonate copolymer, and specifically a polyester-polycarbonate copolymer in which the ester units of formula (8) comprise soft block ester units, also referred to herein as aliphatic dicarboxylic acid ester units. Such a polyester-polycarbonate copolymer comprising soft block ester units is also referred to herein as a poly(aliphatic ester)-polycarbonate. The soft block ester unit can be a C₆₋₂₀ aliphatic dicarboxylic acid ester unit (where C₆₋₂₀ includes the terminal carboxyl groups), and can be straight chain (i.e., unbranched) or branched chain dicarboxylic acids, cycloalkyl or cycloalkylidene-containing dicarboxylic acids units, or combinations of these structural units. In a still further aspect, the C₆₋₂₀ aliphatic dicarboxylic acid ester unit includes a straight chain alkylene group comprising methylene (-CH₂-) repeating units. In a yet further aspect, a useful soft block ester unit comprises units of formula (3a): 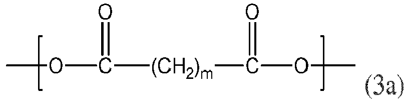 where m is 4 to 18. In a further aspect of formula (8a), m is 8 to 10. The poly(aliphatic ester)-polycarbonate can include less than or equal to 25 wt % of the soft block unit. In a still further aspect, a poly(aliphatic ester)-polycarbonate comprises units of formula (8a) in an amount of 0.5 to 10 wt %, specifically 1 to 9 wt %, and more specifically 3 to 8 wt %, based on the total weight of the poly(aliphatic ester)-polycarbonate.

The poly(aliphatic ester)-polycarbonate is a copolymer of soft block ester units and carbonate units. The poly(aliphatic ester)-polycarbonate is shown in formula (3b): 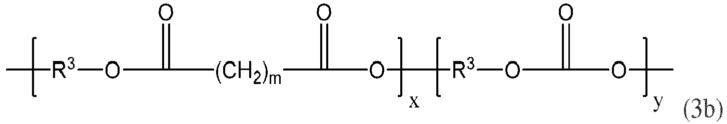 where each R³ is independently derived from a dihydroxyaromatic compound of formula (1), m is 4 to 18, and x and y each represent average weight percentages of the poly(aliphatic ester)-polycarbonate where the average weight percentage ratio x:y is 10:90 to 0.5:99.5, specifically 9:91 to 1:99, and more specifically 8:92 to 3:97, where x+y is 100.

Soft block ester units, as defined herein, can be derived from an alpha, omega C₆₋₂₀ aliphatic dicarboxylic acid or a reactive derivative thereof. In a further aspect, the soft block ester units can be derived from an alpha, omega C₁₀₋₁₂ aliphatic dicarboxylic acid or a reactive derivative thereof. In a still further aspect, the carboxylate portion of the aliphatic ester unit of formula (3a), in which the terminal carboxylate groups are connected by a chain of repeating methylene (-CH₂-) units (where m is as defined for formula (3a)), is derived from the corresponding dicarboxylic acid or reactive derivative thereof, such as the acid halide (specifically, the acid chloride), an ester, or the like. Exemplary alpha, omega dicarboxylic acids (from which the corresponding acid chlorides can be derived) include alpha, omega C₆ dicarboxylic acids such as hexanedioic acid (also referred to as adipic acid); alpha, omega C₁₀ dicarboxylic acids such as decanedioic acid (also referred to as sebacic acid); and alpha, omega C₁₂ dicarboxylic acids such as dodecanedioic acid (sometimes abbreviated as DDDA). It will be appreciated that the aliphatic dicarboxylic acid is not limited to these exemplary carbon chain lengths, and that other chain lengths within the C₆₋₂₀ limitation can be used. In various further aspects, the poly(aliphatic ester)-polycarbonate having soft block ester units comprising a straight chain methylene group and a bisphenol A polycarbonate group is shown in formula (3c): 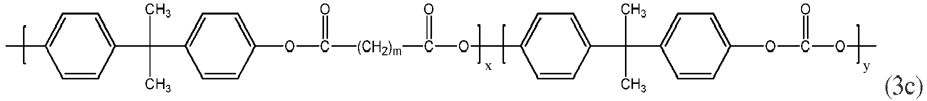 where m is 4 to 18 and x and y are as defined for formula (3b). In a specific exemplary aspect, a useful poly(aliphatic ester)-polycarbonate copolymer comprises sebacic acid ester units and bisphenol A carbonate units (formula (3c), where m is 8, and the average weight ratio of x:y is 6:94).

In a further example, the polycarbonate resin includes a polyester-polycarbonate copolymer, and specifically a polyester-polycarbonate copolymer including ester units that include soft block ester units, also referred to herein as aliphatic dicarboxylic acid ester units. Such a polyester-polycarbonate copolymer including soft block ester units is also referred to herein as a poly(aliphatic ester)-polycarbonate. The soft block ester unit may be a C₆₋₂₀ aliphatic dicarboxylic acid ester unit (where C₆₋₂₀ includes the terminal carboxyl groups), and may be straight chain (i.e., unbranched) or branched chain dicarboxylic acids, cycloalkyl or cycloalkylidene-containing dicarboxylic acids units, or combinations of these structural units. In a still further aspect, the C₆₋₂₀ aliphatic dicarboxylic acid ester unit includes a straight chain alkylene group including methylene (-CH2-) repeating units.

In certain examples, the polycarbonate polymer is a Bisphenol-A polycarbonate, a high molecular weight (Mw) high flow/ductile (HFD) polycarbonate, a low Mw HFD polycarbonate, or a combination thereof.

The flow/ductile polycarbonate may comprise a polycarbonate that provides very high flow (e.g., about 40% greater than a conventional polycarbonate), while maintaining the toughness and ductility for flowability that is typical in conventional polycarbonate. Exemplary high flow/ductile polycarbonates suitable for use in aspects of the present disclosure include the Lexan™ HFD line of polycarbonates, available from SABIC. For a given melt flow, Lexan™ HFD has about a 10-15 °C lower ductile/brittle transition temperature than conventional PC. In addition, Lexan™ HFD exhibits high ductility at temperatures down to about -40 °C, and it processes at temperatures about 20 °C lower than conventional PC having the same ductility.

An exemplary Bisphenol-A polycarbonate suitable for use in aspects of the disclosure includes, but is not limited to, a PC Copolymer (various grades of which are available from SABIC), which includes repeating units derived from BPA and repeating units derived from sebacic acid. In a further aspect, the polycarbonate polymer could be a Bisphenol-A polycarbonate homopolymer, or a blend of the PC Copolymer and the Bisphenol-A polycarbonate homopolymer.

As used herein, "high molecular weight" refers to a molecular weight (Mw) of about 58,000 to about 75,000 grams per mole (g/mol). As used herein, "low molecular weight" refers to a Mw of about 15,000 to about 58,000 g/mol, as measured by gel permeation chromatography using polystyrene standards.

In yet further examples, a polycarbonate copolymer may comprise a polycarbonate-polysiloxane copolymer. Non-limiting examples of polycarbonate-polysiloxane copolymers may comprise various copolymers available from SABIC. In an aspect, the polysiloxane-polycarbonate copolymer may contain 6 % by weight polysiloxane content based upon the total weight of the polysiloxane-polycarbonate copolymer. In various aspects, the 6 % by weight polysiloxane block copolymer may have a weight average molecular weight (Mw) of from about 23,000 to 24,000 g/mol using gel permeation chromatography with a bisphenol A polycarbonate absolute molecular weight standard. In certain aspects, the 6% weight siloxane polysiloxane-polycarbonate copolymer may have a melt volume flow rate (MVR) of about 10 cm³/ 10 min at 300 °C /1.2 kg (see for example, C9030T, a 6 % by weight polysiloxane content copolymer available from SABIC as "transparent" EXL resin polymer).

In another example, the polysiloxane-polycarbonate block may comprise 20 % by weight polysiloxane based upon the total weight of the polysiloxane block copolymer. For example, an appropriate polysiloxane-polycarbonate copolymer may be a bisphenol A polysiloxane-polycarbonate copolymer endcapped with para-cumyl phenol (PCP) and having a 20 % polysiloxane content (see C9030P, commercially available from SABIC as the "opaque" EXL). In various aspects, the weight average molecular weight of the 20 % polysiloxane block copolymer may be about 29,900 g/mol to about 31,000 g/mol when tested according to a polycarbonate standard using gel permeation chromatography (GPC) on a cross-linked styrene-divinylbenzene column and calibrated to polycarbonate references using a UV-VIS detector set at 264 nm on 1 mg/ml samples eluted at a flow rate of about 1.0 ml/minute. Moreover, the 20% polysiloxane block copolymer may have an MVR at 300 °C/1.2 kg of 7 cm³/ 10 min and may exhibit siloxane domains sized in a range of from about 5 micron to about 20 micrometers (microns, µm).

All types of polycarbonate end groups are contemplated as being useful in the polycarbonate composition, provided that such end groups do not significantly adversely affect desired properties of the compositions.

The disclosed composition may comprise from about 20 wt. % to about 80 wt. % a polycarbonate polymer. In particular aspects, the thermally conductive composition includes from about 25 wt. % to about 70 wt. % of a polycarbonate polymer, and in further aspects the thermally conductive composition includes from about 35 wt. % to about 65 wt. % a polycarbonate polymer, or even from about 35 wt. % to about 50 wt. % a polycarbonate polymer.

### POLYPROPYLENE

The present composition may comprise polyolefin elastomers. More specifically, the composition may comprise a polypropylene polymer. Exemplary polypropylene polymers may include, but are not limited to, polypropylene homopolymers such as isotactic polypropylene, syndiotactic polypropylene and atactic polypropylene, propylene α-olefin copolymers. Polypropylene copolymers may also be suitable. Polypropylene polymers employed in the present disclosure may have a particular density. The polypropylene polymer may have a density of less than about 1 kg/cm³ when tested in accordance with ASTM D1505.

In a specific example, the polypropylene may comprise a polypropylene block copolymer. The polypropylene block copolymer may have a density of about 905 kg/cm³ when tested in accordance with ASTM D1505, a melt flow rate of about 2 g/10 min. when tested in accordance with ISO 1133, and tensile strength at yield of about 25 MPa when tested in accordance with ASTM D638. A commercially available polypropylene block copolymer is poly (propylene-ethylene) as 64M40T from SABIC.

The polypropylene may be unmodified, or non-functionalized. As used herein, unmodified or "non-functionalized" refers to the absence of functional groups on the primary chain of the polyolefin. In an example, the polyolefin elastomers of the disclosed composition thus are not copolymerized or grafted with a saturated or unsaturated monomer comprising epoxy, carboxyl, or an acid anhydride group. As a further example, and not to be limiting, the polypropylene does not include a grafting copolymer such as a maleic anhydride grafting polyethylene copolymer.

The disclosed composition may comprise from about 10 wt. % to about 50 wt. % of a polypropylene polymer. In particular aspects, the composition may comprise from about 10 wt. % to about 40 wt. % of a polypropylene polymer, and in further aspects the thermally conductive composition includes from about 10 wt. % to about 50 wt. % a polypropylene polymer, or even from about 12 wt. % to about 50 wt. % a polypropylene polymer.

### COMPATIBILIZER

As used herein, compatibilizer, compatibilizing agent, or other derivatives, may refer to polyfunctional compounds which may interact with the polycarbonate, polypropylene, or both. The compatibilizer may be added to improve the miscibility between the polycarbonate base resin and the polypropylene polymer. The interaction may be chemical (e.g., grafting) and/or physical (e.g., affecting the surface characteristics of the dispersed resin phases). Exemplary conventional compatibilizers may include liquid diene polymers, epoxy compounds, oxidized polyolefin wax, quinones, organosilane compounds, polyfunctional compounds, functionalized polyolefins, and combinations comprising at least one of the foregoing. Compatibilizers are further described in U.S. Patent Nos. 5,132,365 and 6,593,411 as well as U.S. Patent Application No. 2003/0166762.

The compatibilizer of the present disclosure may include a modified or "functionalized" polyolefin/polyolefin elastomer. This refers to the presence of functional groups on the primary chain of the polyolefin. In an example, the compatibilizer of the disclosed composition may be copolymerized or grafted with a saturated or unsaturated monomer comprising epoxy, carboxyl, or an acid anhydride group. As such, the compatibilizer may comprise a maleated polyolefin.

The maleated polyolefin may feature structural characteristics that facilitate the specific blend of the polycarbonate and polypropylene disclosed herein. Generally, a maleated polyolefin polymer may comprise two functional domains: a polyolefin and a maleic anhydride domain. One skilled in the art might appreciate that the polyolefin domain, which may include, for example, a high density polyethylene HDPE or polypropylene, is able to interact with the non-polar polyolefin of the resin composite. The maleic anhydride domain is able to interact with the polar polycarbonate base resin. These maleated polyolefins are generally prepared by grafting maleic anhydride onto the polymer backbone of the desired polyolefin domain. Typically, the maleic anhydride may be grafted such that the resulting maleic anhydride functionalized polyolefin includes from about 1 wt. % to 6 wt. % maleic anhydride. In some examples, the resulting maleic anhydride functionalized polyolefin may include from about 0.5 wt. % to about 2 wt. % maleic anhydride.

In some aspects, the composition the compatibilizer may comprise a maleic anhydride (MAH) grafted polymer, including but not limited to MAH polypropylene (MAH PP). As a further example, and not to be limiting, the maleated polyolefin may include a maleic anhydride-grafted polyethylene copolymer (MAH EP). In yet further examples, the compatibilizer may include a maleic anhydride-grafted polyalphaolefin. Maleic anhydride-grafted polyolefins useful in the present disclosure may include maleic anhydride-grafted ethylene-propylene, maleic anhydride-grafted ethylene-propylene-diene terpolymer (MAH-g-EPDM), maleic anhydride-grafted ethylene-octene copolymer (MAH-g-POE), maleic anhydride-grafted ethylene-butene copolymer (MAH-g-EBR), maleic anhydride-grafted ethylene-acrylic ester copolymer (MAH-g-EAE) or some combination thereof.

As noted above, in certain examples the composition may comprise from about 0.1 wt. % to about 30 wt. % of a compatibilizer. In other examples, the resin composite includes from about 0.1 wt. % to about 25 wt. % of a compatibilizer, or from about 10 wt. % to about 30 wt. % of a compatibilizer, or from about 20 wt. % to about 25 wt. % of a compatibilizer, or from about 5 wt. % to about 25 wt. % of a compatibilizer, or even from about 5 wt. % to about 30 wt. % of a compatibilizer.

### SALT OF SATURATED ALIPHATIC ACID

Compositions of the present disclosure may comprise a saturated aliphatic acid salt. An example of a saturated aliphatic acid salt may comprise a salt of an aliphatic carboxylic acid. Suitable salts of aliphatic carboxylic acids may include, but are not limited to, zinc stearate, aluminum stearate, sodium stearate. Other suitable saturated aliphatic acid salts may include longer chain salts of montanic acid (octacosanoic acid). Commercially available salts may include Licomont™ NAV 101, Licomont™ CAV 102 from Clariant.

The salt of an aliphatic carboxylic acid may be present in an amount of from about 0.01 wt. % to about 0.5 wt. %. For example, the aliphatic carboxylic acid salt may be present in an amount of from about 0.01 wt. % to about 0.3 wt. %, 0.01 wt. % to about 0.2 wt. %, 0.01 wt. % to about 0.15 wt. %, 0.01 wt. % to about 0.12 wt. %, 0.03 wt. % to about 0.5 wt. %, 0.03 wt. % to about 0.1 wt. %, 0.03 wt. % to about 0.12 wt. %, or about 0.03 wt. % to about 0.15 wt. %.

### Optional Polymer Composition Additives

In addition to the foregoing components, the disclosed thermoplastic compositions can optionally include a balance amount of one or more additive materials ordinarily incorporated in thermoplastic compositions of this type, with the proviso that the additives are selected so as to not significantly adversely affect the desired properties of the composition. Combinations of additives can be used. Such additives can be mixed at a suitable time during the mixing of the components for forming the composition. Exemplary and non-limiting examples of additive materials that can be present in the disclosed thermoplastic compositions include one or more of a reinforcing filler, enhancer, acid scavenger, anti-drip agent, antioxidant, antistatic agent, chain extender, colorant (e.g., pigment and/or dye), de-molding agent, flow promoter, flow modifier, lubricant, mold release agent, plasticizer, quenching agent, flame retardant (including for example a thermal stabilizer, a hydrolytic stabilizer, or a light stabilizer), impact modifier, UV absorbing additive, UV reflecting additive and UV stabilizer.

The composition may comprise a suitable reinforcing filler. For example, suitable fillers or reinforcing agents include any materials known for these uses, provided that they do not adversely affect the desired properties. For example, suitable fillers and reinforcing agents include silicates and silica powders such as aluminum silicate (mullite), crystalline silica graphite, natural silica sand, or the like; oxides such as TiO₂;talc, including fibrous, modular, needle shaped, lamellar talc, or the like; wollastonite; surface-treated wollastonite; glass spheres such as hollow and solid glass spheres, silicate spheres, cenospheres, aluminosilicate (armospheres), or the like; kaolin, including hard kaolin, soft kaolin, calcined kaolin, kaolin comprising various coatings known in the art to facilitate compatibility with the polymeric matrix resin, or the like; fibers (including continuous and chopped fibers) such as asbestos, carbon fibers; sulfides such as molybdenum sulfide, zinc sulfide, or the like; flaked fillers such as glass flakes, flaked silicon carbide, aluminum diboride, aluminum flakes, steel flakes or the like; as well as additional fillers and reinforcing agents such as mica, clay, feldspar, flue dust, fillite, quartz, quartzite, perlite, Tripoli, diatomaceous earth, carbon black, or the like, or combinations comprising at least one of the foregoing fillers or reinforcing agents. In a still further aspect, the filler is talc, glass fiber, kenaf fiber, or combinations thereof. In yet a further aspect, the filler is glass fiber. The fillers and reinforcing agents can be coated with a layer of metallic material to facilitate conductivity, or surface treated with silanes, siloxanes, or a combination of silanes and siloxanes to improved adhesion and dispersion with the polymeric matrix resin. In one example, a suitable filler may comprise a hollow glass fiber.

In further aspects, the additional reinforcing filler is selected from mica, talc, clay, wollastonite, zinc sulfide, zinc oxide, carbon fiber, ceramic fiber, ceramic-coated graphite, titanium dioxide, or combinations thereof. As a further example, the composition comprises kaolin (uncalcined hydrated aluminum silicate) as a reinforcing filler. The presence of a reinforcing filler such as kaolin may further reduce the density of the polycarbonate/polypropylene composition without diminishing ductility in the presence of the salt of a carboxylic acid. The reinforcing filler may aid dispersion of an impact modifier thereby improving performance properties (such as, for example, impact strength) of the composition.

The reinforcing filler may be present in an amount of from about 0.01 wt. % to about 50 wt. %. In specific aspects, the reinforcing filler may be present in an amount of from about 0 wt. % to about 5 wt. %. For example, the composition may comprise kaolin in an amount of from about 0 wt. % to about 5 wt. %.

In an aspect, suitable impact modifiers can include an epoxy-functional block copolymer. The epoxy-functional block copolymer can include units derived from a C₂₋₂₀ olefin and units derived from a glycidyl (meth)acrylate. Exemplary olefins include ethylene, propylene, butylene, and the like. The olefin units can be present in the copolymer in the form of blocks, e.g., as polyethylene, polypropylene, polybutylene, and the like blocks. It is also possible to use mixtures of olefins, i.e., blocks containing a mixture of ethylene and propylene units, or blocks of polyethylene together with blocks of polypropylene.

In addition to glycidyl (meth)acrylate units, the epoxy-functional block copolymers can further include additional units, for example C₁₋₄ alkyl (meth)acrylate units. In one aspect, the impact modifier is terpolymeric, comprising polyethylene blocks, methyl acrylate blocks, and glycidyl methacrylate blocks. Specific impact modifiers are a co- or terpolymer including units of ethylene, glycidyl methacrylate (GMA), and methyl acrylate. Suitable impact modifiers include the ethylene-methyl acrylate-glycidyl methacrylate terpolymer comprising 8 wt % glycidyl methacrylate units available under the trade name LOTADER AX8900. Another epoxy-functional block copolymer that can be used in the composition includes ethylene acrylate, for example an ethylene-ethylacrylate copolymer having an ethylacrylate content of less than 20%, available from Rohm and Haas (Dow Chemical) under the trade name Paraloid™ EXL-3330. It will be recognized that combinations of impact modifiers may be used. In some aspects, the impact modifier may be present in an amount from greater than 0 wt % to about 10 wt %. In further aspects, the impact modifier is present in an amount from about 0.01 wt % to about 8 wt %, or from about 0.01 wt % to about 7 wt %, or from about 0.01 wt % to about 6 wt %, or from about 2 wt % to about 8 wt %, or from about 3 wt % to about 7 wt %.

In a further aspect, the disclosed thermoplastic compositions can further include an antioxidant or "stabilizer." Numerous stabilizers are known may be used, in one aspect the stabilizer is a hindered phenol, such as IRGANOX® 1010, available from BASF. In some aspects, the stabilizer may be present in an amount from greater than about 0 wt % to about 5 wt %. In further aspects, the stabilizer is present in an amount from about 0.01 wt % to about 3 wt %, or from about 0.01 wt % to about 2 wt %, or from about 0.01 wt % to about 1 wt %, or from about 0.01 wt % to about .05 wt %, or from about 0.01 wt % to about .02 wt %.

### PROPERTIES

The disclosed compositions combine low density polymers, such as polypropylene, and compatibilizers with polycarbonate and a salt of an aliphatic carboxylic acid to provide lightweight/low density and ductile. These compositions may be light weight/low density and ductile particularly at low temperatures (i.e., 40 °C). Further, these compositions may exhibit both low temperature ductility and impact strength.

As an example, the composition exhibits a density of less 1.5 g/cm³ when tested in accordance with ASTM D792, and wherein the composition exhibits a notched Izod impact strength of greater than 30 J/m when tested in accordance with ASTM D256. The composition may exhibit a density of less than 1.3 g/cm³ when tested in accordance with ASTM D792. The composition may exhibit a density of less than 1.2 g/cm³ when tested in accordance with ASTM D792. The composition may exhibit a density of about 1.05 g/cm³ when tested in accordance with ASTM D792.

### METHODS OF MANUFACTURE

The thermoplastic compositions of the present disclosure can be blended with the aforementioned ingredients by a variety of methods involving intimate admixing of the materials with any additional additives desired in the formulation. Because of the availability of melt blending equipment in commercial polymer processing facilities, melt processing methods are generally preferred. Illustrative examples of equipment used in such melt processing methods include: co-rotating and counter-rotating extruders, single screw extruders, co-kneaders, disc-pack processors and various other types of extrusion equipment. The temperature of the melt in the present process is preferably minimized in order to avoid excessive degradation of the resins. It is often desirable to maintain the melt temperature between about 230°C and about 350°C in the molten resin composition, although higher temperatures can be used provided that the residence time of the resin in the processing equipment is kept short. In some aspects the melt processed composition exits processing equipment such as an extruder through small exit holes in a die. The resulting strands of molten resin are cooled by passing the strands through a water bath. The cooled strands can be chopped into small pellets for packaging and further handling.

Compositions can be manufactured by various methods. For example, the polymeric base resin, and other optional components are first blended in a HENSCHEL-Mixer® high speed mixer. Other low shear processes, including but not limited to hand mixing, can also accomplish this blending. The blend is then fed into the throat of a twin-screw extruder via a hopper. Alternatively, at least one of the components can be incorporated into the composition by feeding directly into the extruder at the throat and/or downstream through a sidestuffer. Additives can also be compounded into a masterbatch with a desired polymeric resin and fed into the extruder. The extruder is generally operated at a temperature higher than that necessary to cause the composition to flow. The extrudate is immediately quenched in a water batch and pelletized. The pellets, so prepared, when cutting the extrudate can be one-fourth inch long or less as desired. Such pellets can be used for subsequent molding, shaping, or forming.

### ARTICLES OF MANUFACTURE

In one aspect, the present disclosure pertains to shaped, formed, or molded articles comprising the thermoplastic compositions. The thermoplastic compositions can be molded into useful shaped articles by a variety of means such as injection molding, extrusion, rotational molding, blow molding and thermoforming to form articles and structural components of, for example, personal or commercial consumer electronics, including but not limited to cellular telephones, tablet computers, personal computers, notebook and portable computers, virtual/augmented reality, and other such equipment, medical applications, RFID applications, automotive applications. In a further aspect, the article is extrusion molded. In a still further aspect, the article is injection molded.

In a further aspect, the resulting disclosed compositions can be used to provide any desired shaped, formed, or molded articles. For example, the disclosed compositions can be molded into useful shaped articles by a variety of means such as injection molding, extrusion, rotational molding, blow molding and thermoforming. As noted above, the disclosed compositions are particularly well suited for use in the manufacture of electronic components and devices. As such, according to some aspects, the disclosed thermoplastic compositions can be used to form articles.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.
Aspect 1: A composition comprising: from about 20 wt. % to about 80 wt. % of a polycarbonate; from about 10 wt. % to about 50 wt. % % of a polypropylene; from about 1 wt. % to about 30 wt. % of a compatibilizer, wherein the composition exhibits a density of less 1.5 g/cm³ when tested in accordance with ASTM D792, and wherein the composition exhibits a notched Izod impact strength of greater than 30 J/m when tested in accordance with ASTM D256.
Aspect 2: A composition comprising: from about 20 wt. % to about 80 wt. % of a polycarbonate; from about 10 wt. % to about 50 wt. % % of a polypropylene; from about 1 wt. % to about 30 wt. % of a compatibilizer; and from about 0.01 wt. % to about 0.5 wt. % of a salt of a saturated aliphatic acid, wherein the composition exhibits a density of less 1.5 g/cm³ when tested in accordance with ASTM D792, and wherein the composition exhibits a notched Izod impact strength of greater than 30 J/m when tested in accordance with ASTM D256.
Aspect 3: A composition comprising: from about 20 wt. % to about 80 wt. % of a polycarbonate; from about 10 wt. % to about 50 wt. % % of a polypropylene; from about 1 wt. % to about 30 wt. % of a compatibilizer; and from about 0.01 wt. % to about 0.5 wt. % of a salt of a long chain aliphatic carboxylic acid, wherein the composition exhibits a density of less 1.5 g/cm³ when tested in accordance with ASTM D792, and wherein the composition exhibits a notched Izod impact strength of greater than 30 J/m when tested in accordance with ASTM D256.
Aspect 4: The composition of any of claims 1-3, wherein the composition exhibits a density of less than 1.3 g/cm³ when tested in accordance with ASTM D792.
Aspect 5: The composition any of claims 1-3, wherein the composition exhibits a density of less than 1.2 g/cm³ when tested in accordance with ASTM D792.
Aspect 6: The composition of any of claims 1-3, wherein the composition exhibits a density of about 1.05 g/cm³ when tested in accordance with ASTM D792.
Aspect 7: The composition of any of claims 1-6, wherein the polycarbonate comprises a bisphenol A derived polycarbonate, a high flow ductile polycarbonate, a branched polycarbonate, or a combination thereof.
Aspect 8: The composition of any of claims 1-7, wherein the polycarbonate comprises a high Mw high flow/ductile polycarbonate, a low Mw high flow/ductile polycarbonate, a polycarbonate copolymer including repeating units derived from Bisphenol-A and repeating units derived from sebacic acid, a Bisphenol-A polycarbonate homopolymer, a polycarbonate polysiloxane copolymer, or a combination thereof.
Aspect 9: The composition of any of claims 1-8, wherein the polypropylene comprises a polypropylene block copolymer having a density of less than 1.0 g/cm3 when tested in accordance with ASTM D1505.
Aspect 10: The composition of any of claims 1-9, wherein the compatibilizer comprises a maleic anhydride functionalized polypropylene or polypropylene copolymer.
Aspect 11: The composition of any of claims 1-10, wherein the compatibilizer comprises a maleic anhydride functionalized copolymer.
Aspect 12: The composition of any of claims 1-11, wherein the compatibilizer comprises ethylene-propylene copolymer (MAH-g-EPM), ethylene-propylene-diene terpolymer (MAH-g-EPDM), or a combination thereof.
Aspect 13: The composition of any of claims 2-12, wherein the saturated aliphatic acid comprises an aliphatic carboxylic acid salt.
Aspect 14: The composition of any of claims 2-12, wherein the saturated aliphatic acid comprises a montanic acid.
Aspect 15: The composition of any of claims 3-14, wherein the salt of a long chain aliphatic carboxylic acid comprises aluminum stearate, zinc stearate, calcium stearate, or a combination thereof.
Aspect 16: The composition of any of claims 3-14, wherein the salt of a long chain aliphatic carboxylic acid comprises calcium stearate.
Aspect 17: The composition of any of claims 1-16, wherein the composition further comprises from 0.01 wt. % to about 50 wt. % of a reinforcing agent.
Aspect 18: The composition of claim 17, wherein the reinforcing agent comprises a hollow glass sphere.
Aspect 19: The composition of any of claims 1-18, wherein the composition further comprises from about 0.01 wt. % to about 20 wt. % of an additional polymer resin.
Aspect 20: The composition of claim 19, wherein the additional polymer resin comprises acrylonitrile butadiene styrene, a polyalkylene polymer, a polyethylene polymer, a polystyrene polymer, a polyphenylene oxide, or a combination thereof.
Aspect 21: The composition of claim 19, wherein the additional polymer resin comprises a low density polymer.
Aspect 22: The composition of claim 19, wherein the additional polymer resin comprises a polymer having a density less than 1.5 g/cm³.
Aspect 23: The composition of any of claims 1-23, wherein the composition further comprises a kaolin clay.
Aspect 24: An article comprising the composition of any one of claims 1-23.
Aspect 25: The article of claim 24, wherein the article comprises an automotive device, an aircraft device, or an electronic device.

As the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting. Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

All publications mentioned herein are incorporated herein by reference to disclose and describe the methods and/or materials in connection with which the publications are cited.

### DEFINITIONS

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polymeric base resin" includes mixtures of two or more polymeric base resins.

As used herein, the term "combination" is inclusive of blends, mixtures, alloys, reaction products, and the like.

As used herein, polycarbonate refers to an oligomer or polymer comprising residues of one or more dihydroxy compounds, e.g., dihydroxy aromatic compounds, joined by carbonate linkages; it also encompasses homopolycarbonates, copolycarbonates, and (co)polyester carbonates.

The terms "BisA," "BPA," or "bisphenol A," which can be used interchangeably, as used herein refers to a compound having a structure represented by the formula: 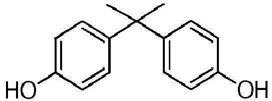 BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additive materials" means that the additive materials can or cannot be included and that the description includes thermoplastic compositions that both include and that do not include additive materials.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein the terms "weight percent," "wt %," and "wt. %," which can be used interchangeably, indicate the percent by weight of a given component based on the total weight of the composition, unless otherwise specified. That is, unless otherwise specified, all wt % values are based on the total weight of the composition. It should be understood that the sum of wt % values for all components in a disclosed composition or formulation are equal to 100.

Certain abbreviations are defined as follows: "g" is grams, "kg" is kilograms, "°C" is degrees Celsius, "min" is minutes, "mm" is millimeter, "mPa" is megapascal, , "RF" is radio frequency, and "RFID" is radio frequency identification.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt %.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

The compositions were prepared by twin-screw extruder compounding process, injection molding process under normal PC processing conditions. In this aspect, samples were prepared using a Twin screw extruder (Toshiba TEM-37BS, L/D=40.5), the temperature of the extruder barrel was set at 245 °C. Pellets extruded from extruder were then injection molded into different standard mechanical properties testing bars.

The materials listed in Table 1 were used to prepare the formulations described herein.

| **Component** | **Chemical description** | **Source** |
|---|---|---|
| HFD PC high Mw | Sebacic acid/BPA/PCP polyester carbonate, CAS: 137397-37-6 | SABIC |
| Opaque PC-Siloxane copolymer | 20% PC/siloxane copolymer, PCP endcapped, CAS: 202483-49-6 | SABIC |
| THPE Branched PC Powder | THPE Branched PC Resin, CAS: 111211-39-3 | SABIC |
| Clay | POLYFIL™ HG90: Uncalcined hydrated aluminum silicate, CAS: 1332-58-7 | KaMin LLC |
| HINDERED PHENOL ANTI-OXIDANT | Hindered phenol anti-oxidant, Irganox1076, CAS: 002082-79-3 | Ciba Specialty Chemicals (China) Ltd. |
| PENTAERYTHRITOL TETRASTEARATE | Pentaerythritol tetrastearate, CAS: 115-83-3 | Faci Asia Pacific PTE LTD |
| PP | PP64M40T polypropylene block copolymer, CAS: 9003-07-0 | SABIC |
| Maleated EP copolymer | Maleated EP copolymer: EXXELOR VA™ 1803, CAS: 31069-12-2 | ExxonMobil Chemical |
| Calcium stearate | Calcium stearate, CAS: 1592-23-0 | Synpro™ Ca Stearate 15F |
| ABS | Bulk ABS resin, CAS: 9003-56-9 | SABIC |
| Hollow glass beads | Hollow glass sphere(non-treated), S60HS, CAS: 65997-17-3 | 3M |

The samples were tested for mechanical and physical performance according to the following standards.

Tensile data was obtained according to ASTM D638.

Flexural data was obtained according to ASTM 790.

Notched Izod Impact (NII) and Unnotched Izod Impact (UNI) data were obtained according to ASTM D256 and ASTM D4812 respectively, the test is under room temperature (23 °C) and low temperature (-40 °C).

Density data was obtained according to ASTM D792.

Table 2 presents conventional formulations. Comparative sample 1 (CS1) comprises polypropylene as a base resin. Comparative samples 2-4 (CS2-4) include ABS or polycarbonate as a base resin. Hollow glass beads, a conventional additive for lower density, were added into the PP, ABS and PC resins. It was apparent that while the PP and ABS based formulations achieved low density, the low temperature notched Izod impact (NII) strength were also low. The NII of the PC based formulation under low temperature was better, especially with the addition of PC-siloxane. However, the density is the highest among the samples.

**Table 2. Comparative formulations.**

| **Item Code** | **Item Description** | **Unit** | **CS1** | **CS2** | **CS3** | **CS4** |
|---|---|---|---|---|---|---|
| **HFD PC high Mw** | Sebacic acid/BPA/PCP polyester carbonate | % | | | 80 | 60 |
| **Opaque PC-Siloxane copolymer** | 20% PC/SILOXANE COPOLYMER,PCP ENDCAPPED | % | | | | 20 |
| **ABS** | Bulk ABS resin | % | | 80 | | |
| **HINDERED PHENOL ANTI-OXIDANT** | HINDERED PHENOL ANTI-OXIDANT | % | | | 0.1 | 0.1 |
| **PENTAERYTHRITOL TETRASTEARATE** | PENTAERYTHRITOL TETRASTEARATE | % | | | 0.1 | 0.1 |
| **PP** | SABIC PP64M40T PP block copolymer | % | 80 | | | |
| **Hollow glass beads** | Hollow glass sphere(non-treated), S60HS | % | 20 | 20 | 20 | 20 |
| **Test item** | Test description | Unit | #1 | #2 | #3 | #4 |
| **Density** | | g/cm³ | 0.8 | 0.92 | 1.03 | 1.11 |
| **Notched Izod impact** | -40 °C, 51bf/ft | J/m | 19 | 21.9 | 25.7 | 97.1 |
| | Ductility | % | 0 | 0 | 0 | 0 |
| | Failure mode | C/H/P/NB | C | C | C | C |
| **Notched Izod impact** | 23 °C, 51bf/ft | J/m | 40.7 | 22.1 | 26.9 | 220 |
| | Ductility | % | 100 | 0 | 0 | 100 |
| | Failure mode | C/H/P/NB | P | C | C | P |
| **Izod-Unnotched** | -40 °C, 51bf/ft | J/m | 135 | 149 | 254 | 1360 |
| | Ductility | % | 0 | 0 | 0 | 0 |
| | Failure mode | C/H/P/NB | C | C | C | C |
| **Izod-Unnotched** | 23 °C, 51bf/ft | J/m | 450 | 145 | 209 | 1780 |
| | Ductility | % | 0 | 0 | 0 | 100 |
| | Failure mode | C/H/P/NB | C | C | C | P |
| **Tensile Strength at yield** | 5mm/min | MPa | 12.4 | 34.4 | 54.8 | 39.7 |
| **Tensile Elongation at break** | | % | 66.5 | 1.6 | 2.6 | 18.8 |
| **Flexural modulus** | 1.27 mm/min | MPa | 1420 | 2600 | 2970 | 2250 |
| **MFR** | 300 °C, 1.2KG, 360S | g/10min | 9.8 | 3.9 | 16.8 | 20.4 |
| | 300 °C, 1.2KG, 1080S | g/10min | | | | |

Table 3 presents further comparative and inventive samples as well as their performance values. Comparative sample 5 (CS5) combines polypropylene and polycarbonate as a base resin. Inventive samples 6 through 9 (S6 - 69) introduce calcium stearate and maleated EP copolymer. In Table 6, P means partly break, NB means not break, C means crack, H means hinge break. CS5 exhibited relatively low NII, particularly low temperature NII and ductility was only 80%. Sample S6 including a compatibilizer (a maleated EP copolymer) low temperature NII has improved and ductility increased significantly, while low density of the composition was maintained. S7 - S9 show values are further enhanced with the addition of calcium stearate, which is usually not used in PC based compositions. These samples have are even lower density, while the ductility is maintained. was added, we can see the composition density can get further decreased, meanwhile, the ductility can be kept. With S9, the increased compatibilizer increased the low temperature NII.

**Table 6. Comparative and inventive samples.**

| **Item Code** | **Item Description** | **Unit** | **CS5** | **S6** | **S7** | **S8** | **S9** |
|---|---|---|---|---|---|---|---|
| **HFD PC high Mw** | Sebacic acid/BPA/PCP polyestercarbonate | % | 38.8 | 38.8 | 38.7 5 | 38.7 | 38.7 |
| **Opaque PC-Siloxane copolymer** | Opaque PC-Siloxane copolymer | % | 11.5 | 11.5 | 11.5 | 11.5 | 11.5 |
| **THPE Branched PC Resin** | THPE Branched PC Powder | % | 11.5 | 11.5 | 11.5 | 11.5 | 11.5 |
| **HINDERED PHENOL ANTI-OXIDANT** | Hindered phenol anti-oxidant | % | 0.1 | 0.1 | 0.1 | 0.1 | 0.1 |
| **PETS** | Pentaerythritol tetrastearate | % | 0.1 | 0.1 | 0.1 | 0.1 | 0.1 |
| **Calcium stearate** | Calcium stearate | % | | | 0.05 | 0.1 | 0.1 |
| **Maleated EP copolymer** | Maleated EP copolymer Exxelor VA1803 | % | | 14.5 | 14.5 | 14.5 | 23.5 |
| **PP** | SABIC PP64M40T PP block copolymer | % | 38 | 23.5 | 23.5 | 23.5 | 14.5 |
| **Test item** | Test description | % | **CS5** | **CS6** | **CS7** | **CS8** | **CS9** |
| **Density** | AVG | g/cm³ | 1.043 | 1.041 | 1.03 9 | 1.038 | 1.03 4 |
| **Notched Izod impact** | -40 °C, 51bf/ft | J/m | 86.6 | 179 | 165 | 166 | 256 |
| | Ductility | % | 80 | 100 | 100 | 100 | 100 |
| | Failure mode | (P, NB, C, H) | 4P+ C | P | P | P | P |
| **Notched Izod impact** | 23 °C, 51bf/ft | J/m | 284 | 439 | 349 | 302 | 395 |
| | Ductility | % | 100 | 100 | 100 | 100 | 100 |
| | Failure mode | (P, NB, C, H) | P | NB | P | P | NB |
| **Izod-Unnotched** | -40 °C, 51bf/ft | J/m | 1300 | 1230 | 984 | 1050 | 1380 |
| | Ductility | % | 100 | 100 | 100 | 100 | 100 |
| | Failure mode | (P, NB, C, H) | P, NB | P, NB | P | P, NB | NB |
| **Izod-Unnotched** | 23 °C, 51bf/ft | J/m | 1270 | 1560 | 1350 | 1290 | 1030 |
| | Ductility | % | 100 | 100 | 100 | 100 | 100 |
| | Failure mode | (P, NB, C, H) | NB | NB | NB | NB | NB |
| **Tensile** | Stress at yield | MPa | 30.2 | 25.2 | 24.2 | 24.3 | 20.3 |
| | Elongation at Break | % | 7.3 | 8.8 | 10.7 | 8.7 | 8.8 |
| **MVR** | 300 °C, 1.2KG, 360sec | | 8.7 | 7.9 | 10.8 | 7.8 | 8.5 |
| **MVR** | 300 °C, 1.2KG, 1080sec | | 11.3 | 10.3 | 9.4 | 10.3 | 9.3 |

Table 7 presents further inventive samples 10 through 12 (S10 - S12). These samples have varying amounts of calcium stearate and/or maleated EP copolymer. With a greater amount of polypropylene polymer replacing the PC polymer as a base resin the density of the compositions is reduced to less than 1.0 g/cm³. The incorporation of calcium stearate and further addition of clay powder (kaolin), the low temperature NII is further increased, while the density remains less than 1.0 g/cm³. All samples have ductility of 100%.

**Table 7. Comparative and inventive samples.**

| **Item Code** | **Item Description** | **Unit** | **S10** | **S11** | **S12** |
|---|---|---|---|---|---|
| **HFD PC high Mw** | Sebacic acid/BPA/PCP polyester carbonate | % | 23.5 | 23.3 | 21.5 |
| **Opaque PC-Siloxane copolymer** | Opaque PC-Siloxane copolymer | % | 7.2 | 7.2 | 6.6 |
| **THPE Branched PC Resin** | THPE Branched PC Powder | % | 7.2 | 7.2 | 6.6 |
| **HINDERED PHENOL ANTI-OXIDANT** | Hindered phenol anti-oxidant | % | 0.1 | 0.1 | 0.1 |
| **PETS** | Pentaerythritol tetrastearate | % | 0.1 | 0.1 | 0.1 |
| **Calcium stearate** | Calcium stearate | % | | 0.2 | 0.2 |
| **Clay** | CLAY | % | | | 3 |
| **Maleated EP copolymer** | Maleated EP copolymer Exxelor VA1803 | % | 23.5 | 23.5 | 23.5 |
| **PP** | SABIC PP64M40T PP block copolymer | % | 38.4 | 38.4 | 38.4 |
| **Test item** | Test description | % | #10 | #11 | #12 |
| **Density** | | g/cm³ | 0.97 5 | 0.97 1 | 0.98 1 |
| **Notched Izod impact** | -40 °C, 51bf/ft | J/m | 102 | 145 | 188 |
| | Ductility | % | 100 | 100 | 100 |
| | Failure mode | C/H/P/ NB | P | P | P |
| **Notched Izod impact** | 23 °C, 51bf/ft | J/m | 198 | 233 | 234 |
| | Ductility | % | 100 | 100 | 100 |
| | Failure mode | C/H/P/ NB | P | P | P |
| **Izod-Unnotched** | -40 °C, 51bf/ft | J/m | 160 0 | 113 0 | 147 0 |
| | Ductility | % | 100 | 100 | 100 |
| | Failure mode | C/H/P/ NB | NB/ P | P | P/N B |
| **Izod-Unnotched** | 23 °C, 51bf/ft | J/m | 126 0 | 109 0 | 103 0 |
| | Ductility | % | 100 | 100 | 100 |
| | Failure mode | C/H/P/ NB | NB | NB | NB |
| **TS @ yield** | 5 mm/min | MPa | 16.5 | 14.1 | 12.7 |
| **TE @ break** | | % | 30.2 | 22.8 | 19.4 |
| **MFR** | 300 °C, 1.2KG, 360sec | g/10min | 5.0 | 4.2 | 4.1 |
| **MFR** | 300 °C, 1.2KG, 1080sec | g/10min | 6.3 | 5.7 | 5.1 |

Thus, combining low density PP and maleic anhydride PP or PP copolymer, as well as a carboxylic acid salt into the PC based compositions, has provided a low density, ductile composition. Without being limiting to any particular mechanism or guidance, the aliphatic salt is conventionally used to cause PC degradation, but here the added salt may cause PC degradation allowing for greater interaction with MAH-PP. Miscibility and mechanical performance may be improved.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the disclosure should be determined with reference to the appended claims, along with the full scope of equivalents to which such claims are entitled.

## Claims

1. A composition comprising:
from about 20 wt. % to about 80 wt. % of a polycarbonate;
from about 10 wt. % to about 50 wt. % % of a polypropylene;
from about 1 wt. % to about 30 wt. % of a compatibilizer; and
from about 0.01 wt. % to about 0.5 wt. % of a salt of a saturated aliphatic acid,
wherein the composition exhibits a density of less 1.5 g/cm³ when tested in accordance with ASTM D792, and wherein the composition exhibits a notched Izod impact strength of greater than 30 J/m when tested in accordance with ASTM D256.

2. The composition of claim 1, wherein the polycarbonate comprises a bisphenol A derived polycarbonate, a high flow ductile polycarbonate, a branched polycarbonate, or a combination thereof.

3. The composition of any of claims 1-2, wherein the polycarbonate comprises a high Mw high flow/ductile polycarbonate, a low Mw high flow/ductile polycarbonate, a polycarbonate copolymer including repeating units derived from Bisphenol-A and repeating units derived from sebacic acid, a Bisphenol-A polycarbonate homopolymer, a polycarbonate polysiloxane copolymer, or a combination thereof.

4. The composition of any of claims 1-3, wherein the polypropylene comprises a polypropylene block copolymer having a density of less than 1.0 g/cm³ when tested in accordance with ASTM D1505.

5. The composition of any of claims 1-4, wherein the compatibilizer comprises a maleic anhydride functionalized polypropylene or polypropylene copolymer.

6. The composition of any of claims 1-5, wherein the salt of a long chain aliphatic carboxylic acid comprises aluminum stearate, zinc stearate, calcium stearate, or a combination thereof.

7. The composition of any of claims 1-6, wherein the salt of a long chain aliphatic carboxylic acid comprises calcium stearate.

8. The composition of any of claims 1-7, wherein the composition further comprises from 0.01 wt. % to about 50 wt. % of a reinforcing agent.

9. The composition of claim 8, wherein the reinforcing agent comprises a hollow glass sphere.

10. The composition of any of claims 1-9, wherein the composition further comprises from about 0.01 wt. % to about 20 wt. % of an additional polymer resin.

11. The composition of claim 10, wherein the additional polymer resin comprises acrylonitrile butadiene styrene, a polyalkylene polymer, a polyethylene polymer, a polystyrene polymer, a polyphenylene oxide, or a combination thereof.

12. The composition of claim 9, wherein the additional polymer resin comprises a polymer having a density less than 1.5 g/cm³.

13. The composition of any of claims 1-12, wherein the composition further comprises a kaolin clay.

14. An article comprising the composition of any one of claims 1-13.

15. The article of claim 14, wherein the article comprises an automotive device, an aircraft device, or an electronic device.
